# EUROPEAN PATENT APPLICATION

(11) **EP 1 444 897 A1**
(43) Date of publication of application: **11.08.2004**
(21) Application number: 03250812.9
(22) Date of filing: 10.02.2003
(51) Int. Cl.: A21B 3/15

(54) **Method and apparatus for cooking a pizza**

(71) Applicant: Smith, Raymond, Wallasey, Merseyside, CH45 4ND (GB)
(72) Inventor: Smith, Raymond, Wallasey, Merseyside, CH45 4ND (GB)
(74) Representative: Gilmour, David Cedric Franklyn

(57) **Abstract**

The method of cooking a pizza comprising placing a pizza in an oven with at least the central region of the pizza resting upon a pizza supporting device having an upper supporting surface such that the central portion of the pizza is raised above the level of the peripheral region of the pizza during cooking by means of the upper supporting surface. A device 1 for performing the method comprises an upper supporting surface 3 for supporting at least a central region of a pizza such that said central region is raised above the level of the peripheral region of the pizza during cooking.

## Description

The present invention relates to a method and apparatus for cooking a pizza and more particularly to a method and apparatus for satisfactorily cooking frozen pizza in a conventional convection oven such as that commonly found in the home.

A pizza comprises a flat, usually circular, dough base upon which is provided a tomato based sauce, cheese and a variety of toppings and has become a very popular convenience food throughout the world. Pizza is usually supplied in a pre-prepared and prepackaged form and is frozen to allow prolonged storage. Such pizzas are cooked in the oven from frozen before serving.

Pizza is usually cooked in the oven directly on a shelf thereof or on a baking tray placed on a shelf. Frequently, a pizza cooked in this way in a conventional convection oven is unsatisfactory since the central region of the pizza remains undercooked and doughy while the outer peripheral regions become dry and overcooked.

An object of the invention is to provide an improved method and apparatus for cooking a pizza which allows a frozen pizza to be cooked satisfactorily in a conventional convection oven.

According to the invention there is provided a method of cooking a pizza comprising placing a pizza in an oven with at least the central region of the pizza resting upon a pizza supporting device having an upper supporting surface such that the central portion of the pizza is raised above the level of the peripheral region of the pizza during cooking by means of the upper supporting surface.

According to a further aspect of the invention there is provided a pizza supporting device for supporting at least a portion of a pizza during cooking in an oven, the pizza supporting device comprising an upper supporting surface for supporting at least a central region of a pizza such that said central region is raised above the level of the peripheral region of the pizza during cooking.

By raising the central region of the pizza above the level of the peripheral region of the pizza the tendency of the central region of the pizza to be undercooked in relation to the outer edge region of the pizza is greatly reduced. Furthermore, the upper supporting surface of the device in contact with the central region of the pizza may provide increased heating to the central region of the pizza by conduction of heat from the device to the central region of the pizza. As a result the pizza is evenly cooked and a more satisfactory result is obtained. Furthermore, cooking times may be quicker and the appearance of the cooked pizza may be considerably improved.

Preferably the device comprises a body having a substantially circular raised upper supporting surface, the diameter of the upper supporting surface being less than the diameter of the pizza to be cooked. Preferably the diameter of the upper supporting surface is between 25% and 75% of the diameter of the pizza to be cooked. More preferably the diameter of the upper supporting surface is between 40% and 60% of the diameter of the pizza to be cooked.

Preferably the device comprises an inverted dish or saucer like member having a substantially planar upper supporting surface and an outer edge region. extending downwardly therefrom. In an alternative embodiment the device may be dome shaped.

Alternatively, the device may comprise a plurality of radially extending arms extending outwardly from a common central axis.

The device may be formed from any suitable heat resistant material such as card, metal, ceramic or a suitable polymeric material. The device may be formed from aluminium foil and be formed by pressing a flat sheet of foil into a suitable inverted dish like or dome shape. The upper supporting surface of the device may be perforated to allow steam and moisture to escape from the underside of the crust in the central region of the pizza. Alternatively the upper supporting surface of the device may have at least one aperture therein.

In one embodiment the upper supporting surface comprises a peripheral rim and a central supporting ring attached to the rim by means of at least two spaced radial legs. The rim, central supporting ring and radial legs provide support for the underside of the pizza and have a very small contact area with the underside of the pizza such that a substantially open space is provided beneath the pizza allowing moisture to escape, in the form of steam, from the underside of the pizza. Preferably the central supporting ring is attached to the rim by three to six equal spaced legs to minimise the surface area of the upper supporting surface while providing sufficient support for the central supporting ring such that the central region of frozen pizza can be supported thereon.

In order to allow the device to be crushed flat to minimise the space required for packaging and/or storage of the device, at least one cut or slot may be provided extending from the outer peripheral rim of the device towards the upper supporting surface, the cut or slot opening up to allow the peripheral rim of the device to be squashed flat. In one embodiment, three equally spaced radially inwardly extending cuts or slots may be provided in the peripheral rim. The device may be formed from a suitably resilient material such that the device returns to its original shape once the squashing or retaining force has been removed and is of sufficient thickness and strength that the device can subsequently support a pizza without deforming. Alternatively at least the peripheral rim of the device may be formed from an elastically deformable material such that the peripheral rim can be squashed flat yet can retain its shape upon removal of a squashing or retaining force to allow the device to support the central region of a pizza above a cooking surface. In a further embodiment the device may be made from a 'memory' thermoplastic material such that it can be supplied in a flat condition but returns to a domed or inverted dish shape when heat is applied thereto, for example when placed in an oven beneath a pizza.

In use, the device may be placed beneath the pizza during packaging or may be supplied separately and placed on the shelf of an oven before the pizza is placed thereupon with the central axis of the pizza being approximately aligned with the central axis of the device.

In a further embodiment the pizza supporting device may be formed from sheet material, such as heat resistant card or plastics, comprising a plurality radially extending arms extending from a common vertical axis and being interconnected on said common axis such that the lower edges of said arms define a lower supporting surface of said device and at least a portion of the upper edges of said arms define said upper supporting surface of said device. Preferably the pizza supporting device is assembled from two planar members provided with transverse slots adjacent a central region thereof whereby said members can be interconnected perpendicular to one another to define four radially extending arms arranged at 90 degree spacing. Alternatively, the device may be formed from a flat blank having score lines and/or cuts thereon to permit the blank to be folded to define a raised upper pizza supporting surface.

By forming the pizza supporting device from one or more flat sheet material members the device can easily be packaged with the pizza in its unassembled state and be easily assembled prior to use. Where the pizza is packaged in a box or on a card base, the sheet material members forming said device may be formed from the packaging itself, said members being defined by preformed score lines allowing the members to be released from the remainder of the packaging prior to use. Alternatively the device may be from separate members included within the packaging of the pizza for assembly before use.

In a further alternative embodiment the pizza supporting device may comprise a baking tray or plate of sufficient size to support a pizza to be cooked, the tray having a raised central region defining a raised pizza supporting surface for supporting the central region of the pizza above the peripheral region thereof during cooking.

The present invention will be described further, by way of example, with reference to the accompanying drawings, in which:-
Fig. 1 is a plan view of a pizza supporting device according to the invention;
Fig. 2 is a sectional view of the device of Fig. 1 taken along line A-A;
Fig. 3 is a perspective view of the device of Fig. 1;
Fig. 4 is a sectional view of the device of Fig. 1 with a frozen pizza placed thereupon prior to cooking;
Fig. 5 is a sectional view of the device of Fig. 1 with a frozen pizza thereupon during/after cooking;
Fig 6. is a plan view of a further embodiment of the invention;
Fig. 7 is a sectional view of the device of Fig. 6 taken along line B-B;
Fig. 8 is a perspective view of a further embodiment of a pizza supporting device according to the invention;
Fig. 9 is a side elevation of the parts of the device of Fig. 8 prior to assembly thereof;
Fig. 10 is a perspective view of a pizza supporting device according to a further embodiment of the invention, and;
Fig. 11 is a plan view of a pizza supporting device according to a yet further embodiment of the invention.

As shown in the drawings, a pizza supporting device 1 according to a first embodiment of the invention comprises a circular inverted dish shaped member having a circular peripheral rim 2, upon which the device can rest on a shelf of an oven or on a baking tray placed in the oven, and a central raised upper supporting surface 3 upon which the central region of a pizza can rest during cooking. The diameter of the device is selected to be between 40% and 60% of the diameter of the pizza which is to be cooked. Pizzas generally come in standard sizes, such as 9" (228.6mm) and 12" (304.8mm), hence a pizza supporting device suitable for a 9" pizza would be 4.5" (114.3mm) in diameter while a device suitable for a 12" pizza would be 6" (152.4mm) in diameter. The raised upper supporting surface 3 will typically be 20mm higher than the peripheral rim 2 of the device 1.

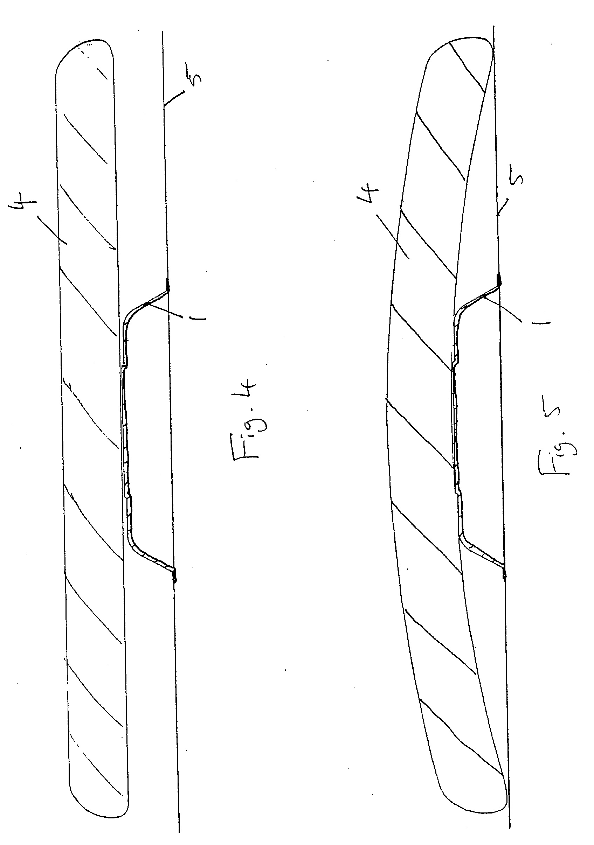

In use, in order to cook a pizza from frozen the pizza supporting device 1 is placed on a shelf of a pre-heated convection oven and a pizza 4 is placed thereupon with the central axis of the pizza being roughly aligned with the central axis of the device. Initially the frozen pizza 4 will rest upon the device as shown in Fig. 4 with the sides of the pizza 4 supported above the shelf 5. As soon as the pizza 4 begins to cook it will sag into the position shown in Fig. 5 with the outer edges of the pizza resting on the oven shelf 5 and the central region of the pizza being in contact with and supported by the upper supporting surface 3 of the device 1.

By raising the central region of the pizza above the peripheral region of the pizza and by providing additional heat to the central region of the pizza by conduction from the device in contact therewith, both the central and the peripheral regions of the pizza are cooked at same rate, avoiding the problems previously associated with the cooking of frozen pizza in a convection oven of undercooking of the central region and overcooking of the peripheral region.

The device may be made from any suitable heat resistant material such as ceramics, heat resistant polymeric material or metallic materials. A preferred material is aluminium foil since such can be easily pressed into the desired shape to form the pizza supporting device, has a relatively high melting point and good thermal conductivity. The pizza supporting device can be provided beneath the pizza as part of the packaging thereof, possibly with an expanded polystyrene former placed therebeneath to avoid crushing of the device during storage and transportation. Alternatively the device can be provided separately and for placement beneath the pizza prior to cooking. The device can be sold in packs of several devices stacked together.

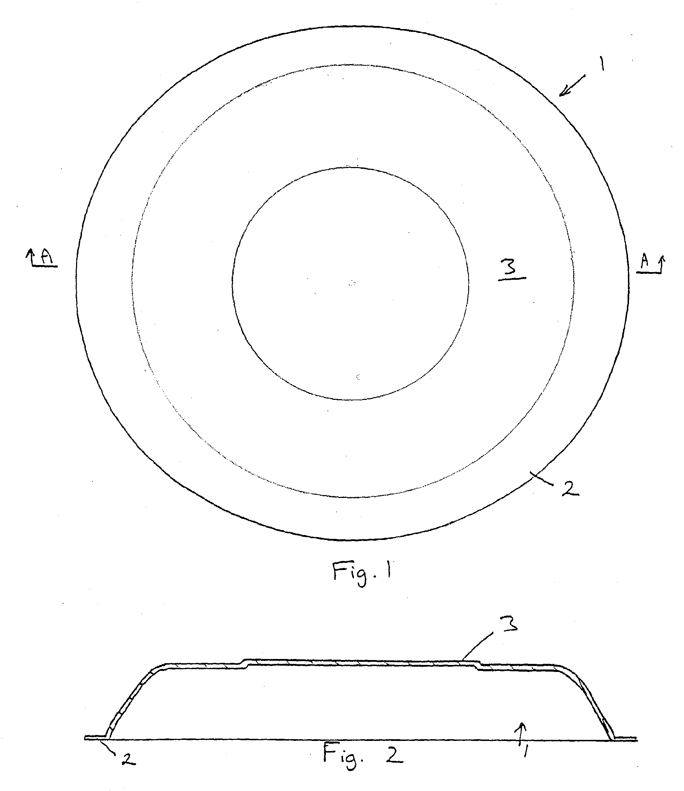

Tests upon the device of Fig. 1 have shown that, compared to cooking a pizza without using the device, cooking time is reduced by approximately 10%, the heat at the centre of the pizza is increased by approximate 10% (7 to 8 degrees centigrade), the pizza is cooked more evenly and the appearance of the pizza is improved.

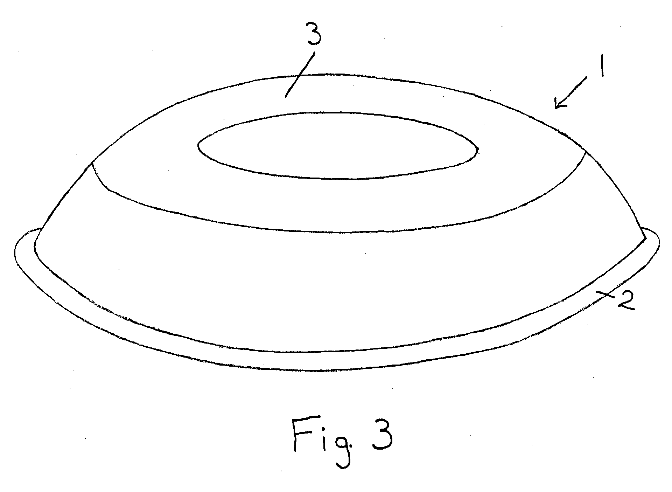

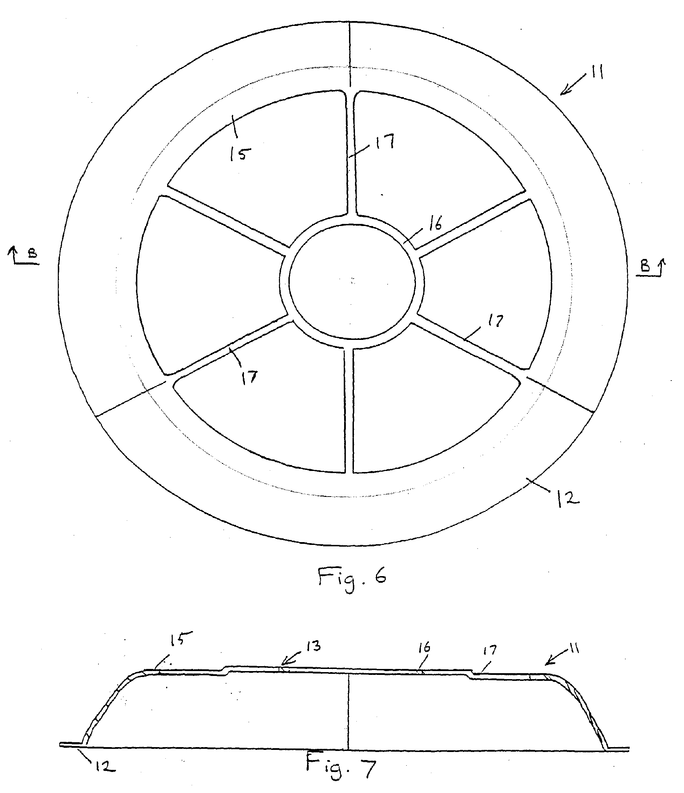

The embodiment shown in Figs. 1 to 3 is particularly suitable for pizzas intended to be placed on an oven tray during cooking. Figs. 6 and 7 show a further embodiment of the invention for use with pizzas that require to be cooked directly on an oven shelf.

Pizzas that are intended to be cooked directly on an oven shelf of an oven may remain slightly doughy in the central region thereof if the device shown in Figs. 1 to 3 is used, because the upper supporting surface 3 of the device is in contact with the lower surface of the central region of the pizza, the device may prevent moisture from escaping from the lower surface of the pizza in the central region thereof. The device shown in Figs. 6 and 7 overcomes this problem.

The device shown in Figs. 6 and 7 comprises a circular peripheral rim 11 and a raised upper portion 13 upon which the central region of the pizza can rest during cooking. The raised upper portion 13 comprises a circular rim 15 and a central supporting ring 16 attached to the rim 15 by means of six equal spaced radial legs 17. The rim 15, central supporting ring 16 and radial legs 17 provide support for the underside of the pizza while minimising the surface area of the device in contact with the underside of the pizza such that a substantially open space is provided beneath the pizza allowing moisture to escape, in the form of steam, from the underside of the pizza. While six radial legs 17 are shown, more or less legs may be required depending on the resilience and thickness of the material from which the device is made. For example, three legs may be sufficient.

The device shown in Figs 6 and 7 might be made from a suitably rigid heat resistant material, such as metal foil or a suitable heat resistant plastic. The device shown in Figs 1 to 3 can be modified to form the device shown in Figs. 6 and 7 simply by cutting away most of the material from the upper supporting surface 3 thereof to leave a central supporting ring support by radial legs.

As shown in Figs. 6 and 7, a number of, for example 3, radial cuts or slits may be provided in the peripheral rim 2,12 of the device shown in either Figs. 1 to 3 or Figs 6 and 7, extending from the outer edge of the peripheral rim 2,12 to a position adjacent the upper supporting surface 3 or supporting portion 13. Such slits allow the device to be packaged in a flat condition when a force is applied to the upper surface of the device, the slits opening up to allow the device to be squashed flat. By selection of a suitably resilient material, such as a heat resistant thermoplastic, of sufficient thickness the device can recover its shape when said pressure is removed and is sufficiently rigid to support a pizza to be cooked without reverting to its flat condition under the weight of the pizza. Alternatively, at least the circular peripheral rim 2,12 of the device may be formed from a suitably resilient and elastic material such that it can be squashed flat for storage/packaging yet be strong enough to support a pizza above a cooking surface (either a baking tray or an oven shelf.

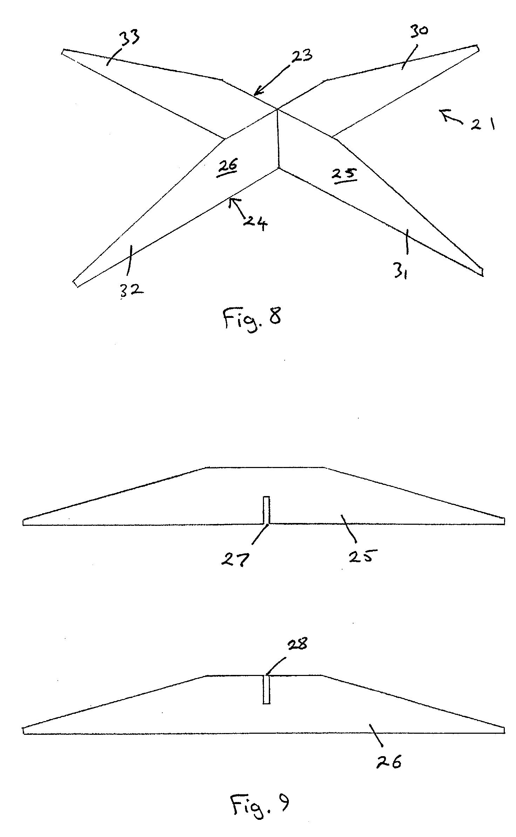

The embodiment shown in Figs. 8 and 9 is particularly suitable where the pizza supporting device is required to be included with the packaging of the pizza and space therefor is restricted. This embodiment also minimises the amount of material required for the device and therefore minimises the cost thereof. The device 21 is formed from a heat resistant card and is intended to be disposable after one use.

The device 21 is assembled from two flat sheet material sections of heat resistant card or suitable plastics material 25, 26, (which may be formed from part of the packaging of the pizza or may be included inside the packaging) each having a respective transverse slot 27, 28 extending from one edge approximately midway between the ends of each section. The slot 27 of the first section 25 extends from the lower edge of the section midway to a position halfway between the upper and lower edges of the section while the slot 28 of the second section 26 extends from the upper edge of the section to a position halfway between the upper and lower edges thereof, said slots being interengageable with one another to permit the sections 25, 26 to be joined together define the supporting device as shown in Fig. 8.

The assembled supporting device 21 comprises four radially extending arms 31, 32, 33 and 34 arranged at 90 degrees to one another and having lower edges defining a lower supporting surface 24 and upper edges defining an upper supporting surface 23 upon which the central region of a pizza can rest during cooking. The sections 25,26 are shaped so that the upper supporting surface 23 defined by the upper edges of the sections 25,26 slopes downwardly towards the outer ends of the radially extending arms 31, 32, 33 and 34 defined by the assembled sections 25,26. The supporting device 21 is particularly easy to produce at minimal cost and hence is particularly suitable for use as a disposable single use device.

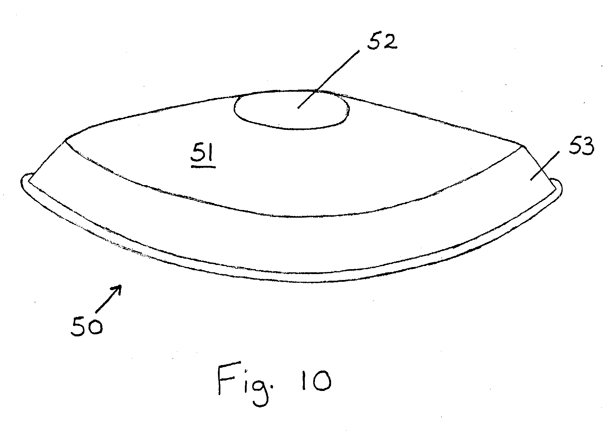

The device 50 shown in Fig. 10 has been shown to be suitable for cooking pizza's, from frozen or non-frozen, both placed directly on the oven shelf and those which must be cooked on a baking tray. The device 50 is formed from thin, lightweight aluminium having excellent heat conduction properties. Accordingly, heat is effectively transferred by conduction from the upper surface 51 of the device to the underside of the central region of the pizza. A circular aperture 52 is provided at the central region of the device to permit steam and moisture to escape from the central region of the pizza. The device can be washed and reused many times. The angle of the upper pizza supporting surface 51 of the device is arranged at a shallower slope than the peripheral region 53 of the device.

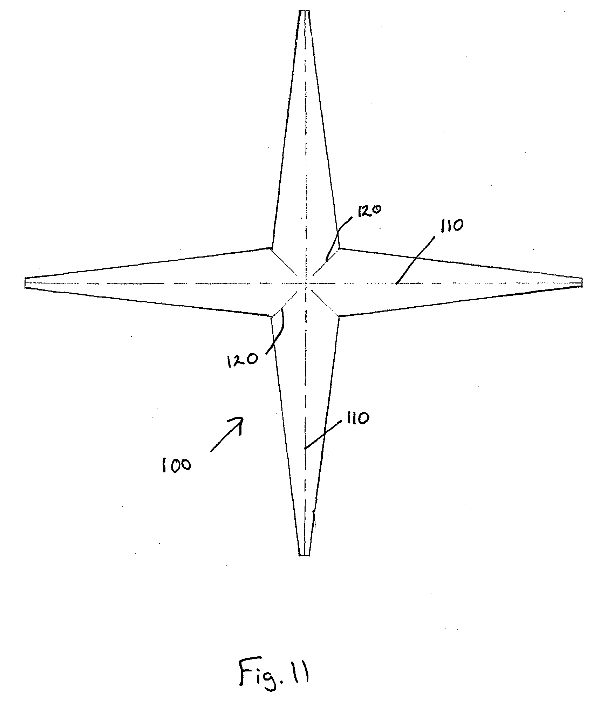

The device 100 shown in Fig. 11 can be formed from a card blank, which may be formed as part of the packaging of the pizza having perforations or cut lines permitting the blank to be separated from the remainder of the packaging. The blank has a series of score or fold lines 110 formed thereon and cut portions 120, permitting the blank to be folded to define the device of Fig. 11, the fold lines 110 defining upper edges of the device forming the pizza supporting surface.

## Claims

1. A method of cooking a pizza comprising placing a pizza in an oven with at least the central region of the pizza resting upon a pizza supporting device having an upper supporting surface such that the central portion of the pizza is raised above the level of the peripheral region of the pizza during cooking by means of the upper supporting surface.

2. A device for supporting at least a portion of a pizza during cooking in an oven, the device comprising an upper supporting surface for supporting at least a central region of a pizza such that said central region is raised above the level of the peripheral region of the pizza during cooking.

3. A device as claimed in claim 2, wherein the upper supporting surface comprises a substantially circular raised portion, the diameter of the upper supporting surface being less than the diameter of the pizza to be cooked, the diameter of the upper supporting surface preferably being between 25% and 75% of the diameter of the pizza to be cooked, and more preferably between 40% and 60% of the diameter of the pizza to be cooked.

4. A device as claimed in claim 2, wherein the device comprises an inverted dish or saucer like member having a substantially planar upper supporting surface and an outer edge region extending downwardly therefrom.

5. A device as claimed in claim 2, wherein the device is dome shaped.

6. A device as claimed in claim 2, wherein the device comprises a plurality of radially extending arms extending outwardly from a common central axis.

7. A device as claimed in any of claims 2 to 6, wherein the device is formed from a heat resistant material such as card, metal, ceramic or a suitable polymeric material or aluminium.

8. A device as claimed in any of claims 2 to 7, wherein at least a portion of the upper supporting surface of the device is perforated to allow steam and moisture to escape from the underside of the crust in the central region of the pizza, preferably the upper supporting surface of the device having at least one aperture therein.

9. A device as claimed in claim 8, wherein a single aperture is provided in the centre of the supporting surface.

10. A device as claimed in claim 9, wherein the upper supporting surface comprises a peripheral rim and a central supporting ring attached to the rim by means of at least two spaced radial legs, preferably three to six equal spaced legs.

11. A device as claimed in claim 6, wherein the device is from sheet material, such as heat resistant card or plastics, comprising a plurality radially extending arms extending from a common vertical axis and being interconnected on said common axis such that the lower edges of said arms define a lower supporting surface of said device and at least a portion of the upper edges of said arms define said upper supporting surface of said device, the device preferably being assembled from two planar members provided with transverse slots adjacent a central region thereof whereby said members can be interconnected perpendicular to one another to define four radially extending arms arranged at 90 degree spacing.

12. A device as claimed in claim 2, wherein the device is formed from a flat blank having score lines and/or cuts thereon to permit the blank to be folded to define a raised upper pizza supporting surface.

13. A device for supporting at least a portion of a pizza during cooking in an oven, the device comprising a baking tray or plate of sufficient size to support a pizza to be cooked, the tray having a raised central region defining a raised pizza supporting surface for supporting the central region of the pizza above the peripheral region thereof during cooking.
